# EUROPÄISCHE PATENTANMELDUNG

(11) **EP 1 531 035 A1**
(43) Veröffentlichungstag der Anmeldung: **18.05.2005**
(21) Anmeldenummer: 04026346.9
(22) Anmeldetag: 05.11.2004
(51) Int. Cl.: B29C 59/16, B29C 71/04, B29C 73/26, B29C 73/10

(54) **Verfahren zum Entfernen von Matrixharzen aus faserverstärkten Kunststoffbauteilen**

(30) Priorität: 13.11.2003 DE 10352964
(71) Anmelder: Deutsches Zentrum für Luft- und Raumfahrt e.V., 51147 Köln (DE)
(72) Erfinder: Kleineberg, Markus, 30966 Hemmingen (DE); Riedel, Ulrich, 38108 Braunschweig (DE); Hanke, Michael, 38102 Braunschweig (DE); Meyer, Matthias, 38114 Braunschweig (DE)
(74) Vertreter: Rehberg Hüppe + Partner

(57) **Zusammenfassung**

Bei einem Verfahren zum Entfernen von Matrixharzen aus faserverstärkten Kunststoffbauteilen (2) mit einer Kunststoffmatrix aus Matrixharzen, in die zur Verstärkung Fasern eingebettet sind, insbesondere als vorbereitende Maßnahme für eine sich anschließende Reparatur oder einen sich anschließenden Fügevorgang, werden die Matrixharze in einem definierten Bereich (3) durch Einwirkung von Mikrowellenstrahlung (4) entfernt, ohne die Fasern in dem Bereich zu zerstören, um eine Reinfiltrierung des Bereichs (3) mit Harzen zu ermöglichen.

## Beschreibung

Die Erfindung betrifft ein Verfahren zum Entfernen von Matrixharzen aus faserverstärkten Kunststoffbauteilen, insbesondere als vorbereitende Maßnahme für eine sich anschließende Reparatur oder einen sich anschließenden Fügevorgang, mit den Merkmalen des Oberbegriffs des Patentanspruchs 1.

### STAND DER TECHNIK

Ein Verfahren mit den Merkmalen des Oberbegriffs des Patentanspruchs 1 ist aus der DE 39 03 153 A1 bekannt. Bei dem bekannten Verfahren, das richtigerweise als Verfahren zur Behandlung von Oberflächen aus Faserverbundwerkstoffen bezeichnet ist, wird ein Laser verwendet, um die ausgehärteten Matrixharze in einer definierten Tiefe abzutragen, wobei die geregelte Energie des Lasers nur zur Entfernung des Polymers ausreicht, ohne die Fasern erkennbar zu schädigen. Die mit einem Laserstrahl erreichbare Tiefe bei der Entfernung der Matrixharze ist aber tatsächlich nur gering. Da die Fasern des Verbundes durch den Laser nicht geschädigt werden sollen, ist seine Eindringtiefe durch die abgeschattete Bereiche begrenzt, die unter den frei gelegten Fasern liegen. Delaminationen, die im Volumen eines faserverstärkten Kunststoffbauteils auftreten, können nicht unter Anwendung des bekannten Verfahrens durch anschließende Reinfiltrierung der delaminierten Bereiche repariert werden, da die aus dem Verbund entfernte Harzmenge so gering ist, dass eine ausreichende Stabilität im reinfiltrierten Bereich nicht sichergestellt wird. Das bekannte Verfahren hat sich daher zur Reparatur von faserverstärkten Kunststoffbauteilen nicht durchgesetzt.

Aus der GB 22 65 854 A und der DE 199 29 666 C2 ist es bekannt, einen Wärmeeintrag, der bei der Herstellung von faserverstärkten Kunststoffbauteilen in die Matrixharze benötigt wird, um diese beispielsweise fliesfähig zu halten oder später unter definierten thermischen Bedingungen auszuhärten, durch Mikrowellenstrahlung zu bewirken.

Aus der EP 1 006 758 A1 ist eine fahrbare Mikrowellenheizeinrichtung zur Verwendung beispielsweise zum Trocknen und/oder Erweichen von Bodenflächen bekannt.

### AUFGABE DER ERFINDUNG

Der Erfindung liegt die Aufgabe zugrunde, ein Verfahren mit den Merkmalen des Oberbegriffs des Patentanspruchs 1 aufzuzeigen, das zur Vorbereitung bzw. Durchführung so hochwertiger Reparaturen und Verbindungen von faserverstärkten Kunststoffbauteilen geeignet ist, dass sich dies bereits bei der Auslegung von faserverstärkten Kunststoffbauteilen in einer Gewichtsreduktion bemerkbar macht, weil nicht mehr die Möglichkeit einer stabilitätsschwächenden Reparatur einkalkuliert werden muss. Insbesondere soll bei Reparaturen auf sogenannte "Doubler" zur Strukturverstärkung im Bereich von reparierten Stellen verzichtet werden können.

### LÖSUNG

Die Aufgabe der Erfindung wird durch ein Verfahren mit den Merkmalen des Patentanspruchs 1 gelöst. Bevorzugte Ausführungsformen des neuen Verfahrens sind in den Unteransprüchen 2 bis 10 beschrieben.

### BESCHREIBUNG DER ERFINDUNG

Bei dem neuen Verfahren wird zur Entfernung von Matrixharzen aus einem definierten Bereich eines faserverstärkten Kunststoffbauteils Mikrowellenstrahlung eingesetzt. Es stellt sich heraus, dass mit Mikrowellenstrahlung Matrixharze gezielt thermisch entfernt werden können, um sie von den Fasern in dem definierten Bereich zu entfernen. Mikrowellen sind aufgrund des volumetrischen Erwärmungsmechanismus geeignet, die Matrixharze aus definierten Bereichen im Volumen eines Faserverbundbauteils zu entfernen, ohne die Faser dabei weiter zu schädigen. Der Energieeintrag mit Mikrowellenstrahlung ist dabei gezielt steuerbar, so dass eine kontrollierte thermische Entfernung der Matrixharze erfolgt und die Fasern mit einer 10fach höheren thermischen Zersetzungstemperatur ungeschädigt bleiben. Abschattungen von Fasern durch darüber liegende Fasern können aufgrund der Eindringtiefe der Mikrowelle in den Verbund vernachlässigt werden, wodurch die Entfernung von Matrixharzen aus Bauteilen mit großen Wandstärken möglich wird. Die Fasern, aus denen die Matrixharze entfernt sind, sind für eine Weiterverarbeitung geeignet. Damit ist die Vorbereitung für eine ggf. im Anschluss durchzuführende Reparatur oder einen Fügevorgang gegeben. Die Reparatur selbst besteht in der Regel aus einer Reinfiltrierung, die mit einem geeignete Harz- oder Klebesystem durchzuführen ist. Der ursprünglich Verlauf des Kraftflusses im Bauteil wird durch diese Form der Reparatur weitgehend erhalten. Der Wärmeeintrag der Mikrowelle wird entweder über die emittierte Mikrowellenleistung gesteuert oder über den Prozessparameter der Temperatur geregelt, wobei die Temperatur im lokalen Erwärmungsbereich der Steuerparameter für die Regelung der Mikrowellenleistung ist. Die Steuerbarkeit des Wärmeeintrags von Mikrowellenstrahlung ist bei dem relativ großen Temperaturunterschied zwischen der Verdampfungstemperatur von üblichen Matrixharzen und beispielsweise der Temperatur, ab der eine Gefahr von Schädigungen von Kohlenstofffasern besteht, mehr als ausreichend. Auch bei anderen Matrixharz-Faserkombinationen außerhalb des Bereichs der sogenannten kohlefaserverstärkten Kunststoffe kann die erfindungsgemäße selektive Entfernung der Matrixharze durch Wärmeübertrag mit Mikrowellenstrahlung ausgeführt werden.

Die Mikrowellenstrahlung kann außer zum Entfernen der Matrixharze aus dem definierten Bereich auch beim Reinfiltrieren des Bereichs mit Harzen geeigneter Harz- oder Klebesystemen, die im Folgenden auch als Reparaturharze bezeichnet werden, eingesetzt werden. Ein Beispiel ist die Steuerung der temperaturabhängigen Viskosität der Reparaturharze, um das gesamte Volumen eines Reparaturbereichs während der Reinfiltration mit Reparaturharz auszufüllen. Die Aushärtung der Reparaturharze mittels Mikrowellenstrahlung ermöglicht hierbei eine dezidierte Prozessführung zur Erreichung optimaler Werkstoffeigenschaften und einer bestmöglichen Anbindung an unversehrte Bauteilbereiche. Diese Form der Reparatur stellt im Hinblick auf die mechanischen Eigenschaften, wie Kerbwirkung und Kraftfluss, ein für den Werkstoff optimiertes Verfahren dar und besitzt damit in Bezug auf Reparaturmaßnahmen ein großes Leichtbaupotential.

Sofern die Reinfiltrierung mit Reparaturharzen erfolgt, die dieselbe Zusammensetzung wie die ursprünglichen Matrixharze aufweisen, wird das Kunststoffbauteil in dem Sinne weitest möglich repariert, dass die reparierte Struktur weitest möglich der Struktur entspricht, die ursprünglich hergestellt wurde bzw. werden sollte.

Durch die Möglichkeit der Entfernung der ursprünglichen Matrixharze im Volumen und der Nachbildung des Temperaturzyklus des ursprünglichen Herstellungsprozesses mit der Mikrowellenstrahlung sind bei dem neuen Verfahren besonders gute Voraussetzungen dafür geschaffen, dass die Reinfiltration mit Reparaturharzen erfolgen kann, die dieselbe Zusammensetzung wie die ursprünglichen Matrixharze aufweisen. D.h., man ist nicht auf spezielle Reparaturharze angewiesen, die unter speziellen Reparaturbedingungen aushärten, weil die ursprünglichen Herstellungsbedingungen bei der Reparatur nicht eingehalten werden können.

Die bei dem neuen Verfahren einsetzbare Mikrowellenstrahlung ist nicht auf einen kleinen Frequenzbereich beschränkt. In Abhängigkeit von den vorliegenden Matrixharzen wird die Absorption der Mikrowellenstrahlung zwar im gewissen Umfang variieren, Mikrowellenstrahlung im Frequenzbereich von 2,45 bis 5,8 GHz hat sich aber als universell einsetzbar erwiesen.

In einer bevorzugten Ausführungsform des neuen Verfahrens zum Verbinden von faserverstärkten Kunststoffbauteilen wird vor dem Neuinfiltrieren eine weitere Faserstruktur an die Fasern in dem Bereich angesetzt, aus dem die Matrixharze zuvor entfernt wurden. Anschließend werden die Fasern in dem Bereich und die weitere Faserstruktur mit denselben Matrixharzen infiltriert. Insbesondere kann es sich bei der Faserstruktur um einen Bereich eines weiteren faserverstärkten Kunststoffbauteils handeln, aus dem die Matrixharze ebenfalls durch Anwendung von Mikrowellenstrahlung entfernt wurden.

Bezüglich der technischen Details der Entfernung der Matrixharze aus dem Bereich der Einwirkung der Mikrowellenstrahlung ist es bevorzugt, wenn die verdampfenden Matrixharze abgesaugt werden. Beispielsweise kann die Umgebung des mit Mikrowellenstrahlung behandelten Bereichs durch Absaugung unter Unterdruck gehalten werden, um ein Austreten der verdampften Matrixharze in die weitere Umgebung zuverlässig zu verhindern.

Weiterhin ist es bevorzugt, wenn das Entfernen der Matrixharze in einer Schutzgasatmosphäre erfolgt, um beispielsweise Oxidationsprozesse von Kohlenstofffasern auszuschließen, die bei Temperaturen weit unterhalb der thermischen Zerstörung der Struktur der Fasern einsetzen kann.

Die Temperatur des faserverstärkten Kunststoffbauteils kann kontaktlos überwacht werden und zwar sowohl in dem Bereich, aus dem die Matrixharze entfernt werden sollen, als auch in angrenzenden Bereichen, in denen die thermische Belastung der verbleibenden Matrixharze so gering wie möglich gehalten werden sollte.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine mögliche Anordnung zur Entfernung von Matrixharzen aus einem definierten Bereich eines faserverstärkten Kunststoffbauteils mit Mikrowellenstrahlung.
- **Fig. 2**: zeigt ein faserverstärktes Kunststoffbauteil mit einer lokalen Delamination.
- **Fig. 3**: das Kunststoffbauteil gemäß Fig. 2 mit einer Wärmeeinflusszone beim Entfernen der Matrixharze im Bereich der Delamination,
- **Fig. 4**: das Kunststoffbauteil nach dem Entfernen der Matrixharze in dem definierten Bereich gemäß Fig. 3 und
- **Fig. 5**: das nach dem Neuinfiltrieren reparierte Kunststoffbauteil.
- **Fig. 6**: zwei miteinander zu verbindende faserverstärkte Kunststoffbauteile.
- **Fig. 7**: die Kunststoffbauteile gemäß Fig. 6 nach dem Entfernen der Matrixharze mit Mikrowellenstrahlung aus dem Fügebereich.
- **Fig. 8**: die aneinander gesetzten Bauteile gemäß Fig. 7 mit einem matrixharzfreien gemeinsamen Fügebereich und
- **Fig. 9**: die durch Infiltrieren des Fügebereichs gemäß Fig. 8 miteinander verbundenen Kunststoffbauteile.

### FIGURENBESCHREIBUNG

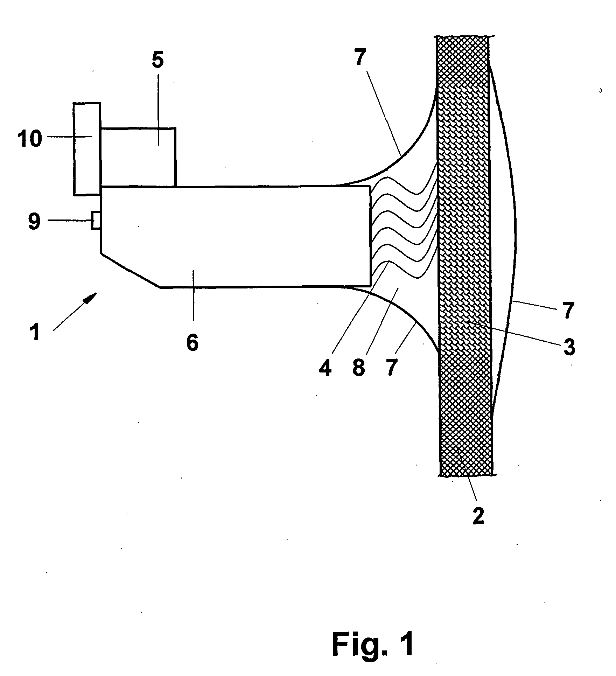

**Fig. 1** zeigt die Anordnung eines Mikrowellengeräts 1 gegenüber einem faserverstärkten Kunststoffbauteil 2 zur Durchführung des neuen Verfahrens. Das Mikrowellengerät 1 ist ein mobiles Mikrowellengerät, das zur Bestrahlung eines definierten Bereichs 3 des Kunststoffbauteils 2 mit Mikrowellenstrahlung 4 vorgesehen ist, um in dem Bereich 3 Matrixharze des Kunststoffbauteils 2 zu verdampfen, ohne die in dem Bereich 3 ebenfalls vorliegenden verstärkenden Fasern, beispielsweise Kohlenstofffasern, thermisch oder anderweitig zu schädigen. Das Mikrowellengerät 1 weist eine Mikrowellenquelle 5 auf, die die Mikrowellen in eine Antennen-/Hohlleiterstruktur 6 einkoppelt. Aus der Antennen-/Hohlleiterstruktur 6 treten die Mikrowellen 4 auf den Bereich 3 des Kunststoffbauteils 2 hin aus. Dabei ist eine seitliche Schirmung 7 vorgesehen, um das Austreten der Mikrowellen 4 in die Umgebung der Anordnung gemäß Fig. 1 zu verhindern. Darüber hinaus definiert die Schirmung 7 einen Arbeitsbereich, in dem zum Schutz der Fasern des Kunststoffbauteils 2 eine Schutzgasatmosphäre 8 vorliegt und aus dem mit der Mikrowellenstrahlung 4 verdampfte Matrixharze über die Antennen-Hohlleiterstruktur 6 abgesaugt werden. Auf der dem Mikrowellengerät 1 abgekehrten Rückseite des Kunststoffbauteils 2 kann ein weiterer Teil der Schirmung 7 vorgesehen sein. Dies ist insbesondere dann sinnvoll, wenn der Bereich 3, aus dem die Matrixharze entfernt werden sollen, sich über die gesamte Dicke des Kunststoffbauteils 2 erstreckt. An dem Mikrowellengerät 1 kann weiterhin eine Kamera 9 vorgesehen sein, um das Entfernen der Matrixharze mit der Mikrowellen 4 zu überwachen. Zudem können an einer Anzeigeeinrichtung 10 beispielsweise die Temperatur des Kunststoffbauteils 2 an verschiedenen Stellen des Bereichs 3 angezeigt werden, um die Wirkung der Mikrowellen 4 bei der Erwärmung der Matrixharze zu kontrollieren. Die an der Anzeigevorrichtung 10 angezeigten Temperaturen können berührungslos mit einem Pyrometer gemessen werden, dessen Eingangssignal zur Regelung der freigesetzten Mikrowellenleistung verwendbar ist. Mit der Kamera 9 oder durch direkte Sichtkontrolle kann festgestellt werden, wann die Matrixharze vollständig aus dem Bereich 3 des Kunststoffbauteils 2 entfernt sind. Das Mikrowellengerät 1 gemäß Fig. 1 ist mobil und kann beispielsweise lokal an Flugzeugen eingesetzt werden, um direkt an diesen Reparaturen von fehlerhaften oder beschädigten faserverstärkten Kunststoffbauteilen 2 vorzunehmen.

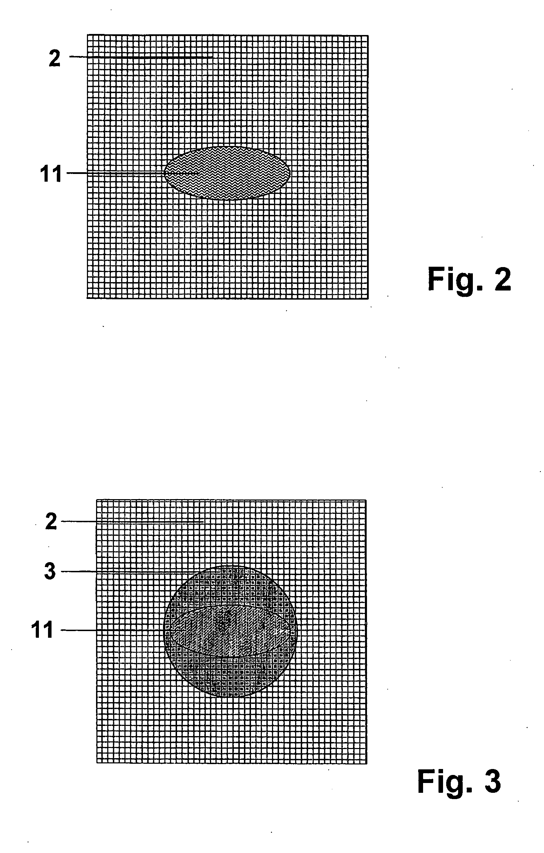

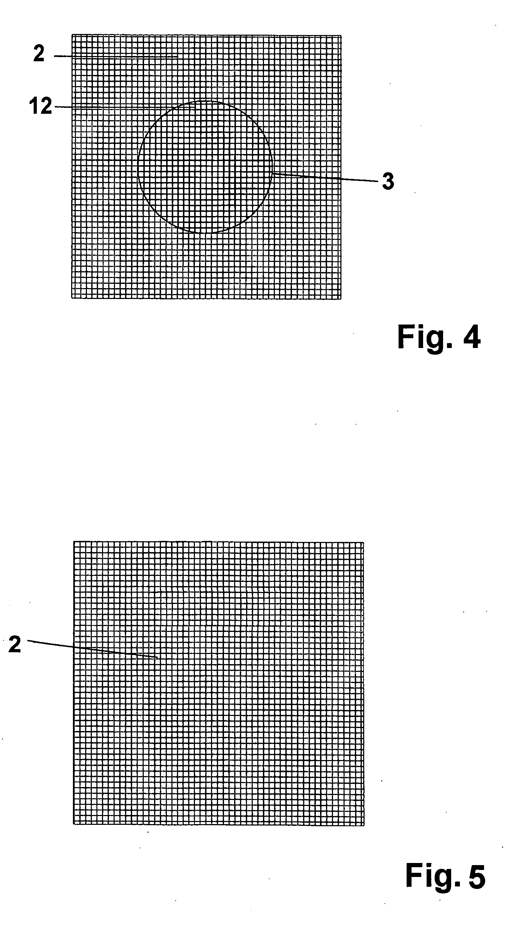

In den Fig. 2 bis 5 ist die Reparatur eines faserverstärkten Kunststoffbauteils 2 skizziert, bei dem als reparaturbedürftiger Fehler eine lokal begrenzte Delamination 11 aufgetreten ist, s. Fig. 2. Um diese Delamination 11 zu beseitigen, werden in dem die Delamination 11 überdeckenden Bereich 3 gemäß Fig. 3 die Matrixharze durch Einwirkung von Mikrowellenstrahlung entfernt, d.h. verdampft, so dass in dem Bereich 3 nur die Fasern 12 zurückbleiben, s. Fig. 4. Jetzt erfolgt die Neuinfiltration von Matrixharzen in den Bereich 3. Dabei handelt es sich vorzugsweise um Matrixharze mit derselben Zusammensetzung wie bei dem ursprünglichen Kunststoffbauteil 2. Um die Neuinfiltration von Matrixharzen in den Bereich 3 vollständig umzusetzen, ist es sinnvoll, den Bereich 3 zunächst zu evakuieren. Es gelten hierbei im Wesentlichen dieselben Forderungen wie beim erstmaligen Infiltrieren von Fasern mit Matrixharzen. Bei Neuinfiltrieren der Matrixharze in den Bereich 3 kann weitere Mikrowellenstrahlung dazu verwendet werden, um die Matrixharze beispielsweise zunächst dünnflüssig zu halten, so dass sie das gesamte freie Volumen des Bereichs 3 ausfüllen. Anschließend kann Mikrowellenstrahlung zur Temperierung der in den Bereich 3 neuinfiltrierten Matrixharze verwendet werden, um diese beispielsweise auszuhärten und mit gewünschten Materialeigenschaften zu versehen. Das in Fig. 5 wiedergegebene reparierte Kunststoffbauteil 2 weist ohne sogenannte "Doubler" dem ursprünglichen Bauteil 2 vor dem Auftreten der Delamination 11 weitestgehend gleichkommende Eigenschaften auf.

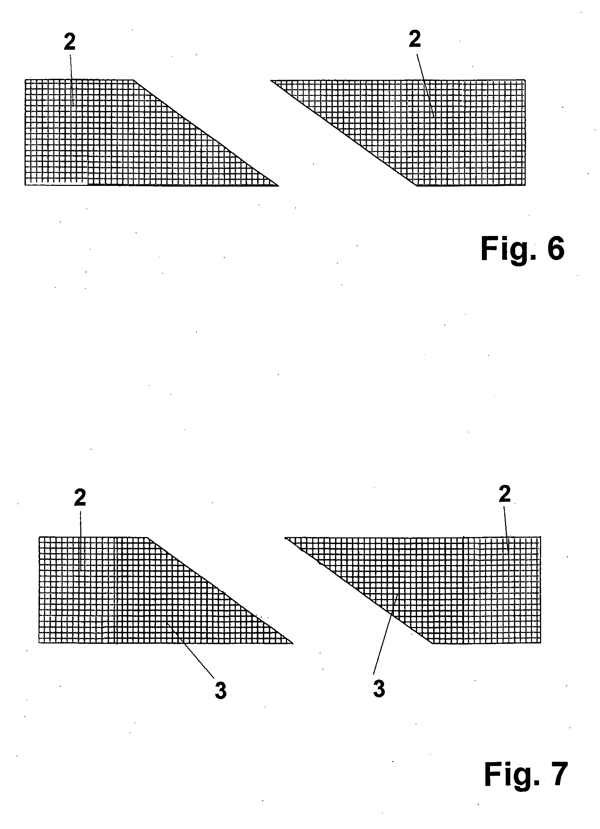

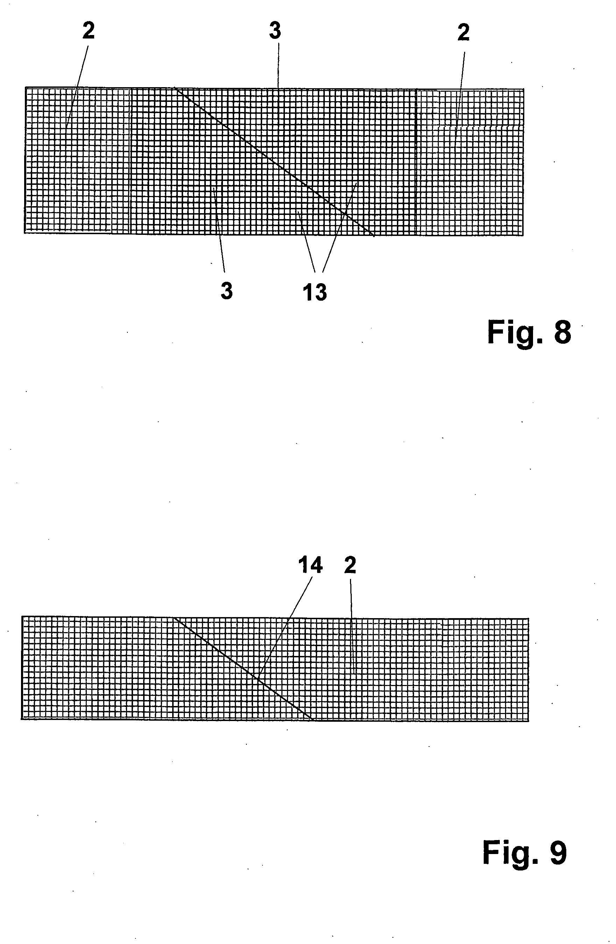

In den Fig. 6 bis 9 ist skizziert, wie zwei Kunststoffbauteile 2, die zunächst nicht zum unmittelbaren Verbinden miteinander vorbereitet sind, beispielsweise im Rahmen einer Reparatur miteinander verbunden werden. Zumindest sind die Fasern der Bauteile 2 zunächst vollständig infiltriert, wie in Fig. 6 wiedergegeben ist. Als nächstes werden gemäß Fig. 7 aus einem Bereich 3 jedes Kunststoffbauteils 2 die Matrixharze unter Einwirkung von Mikrowellenstrahlung entfernt. Anschließend werden gemäß Fig. 8 die Bereiche 3 der beiden Kunststoffbauteile 2 zu einem gemeinsamen Fügebereich 13 zusammengefügt. Dieser Fügebereich 13 wird abschließend mit Matrixharzen neu infiltriert, wodurch die beiden Bauteile 2 zu einem einzigen Bauteil 2 verbunden werden, dessen Fügelinie 14 nur im Bereich der Fasern nachvollziehbar ist, weil die Matrix über diese Fügelinie 14 hinweg durchgängig ist.

### BEZUGSZEICHENLISTE

- 1: Mikrowellengerät
- 2: Kunststoffbauteil
- 3: Bereich
- 4: Mikrowellenstrahlung
- 5: Mikrowellenquelle
- 6: Antennen-/Hohlleiterstruktur
- 7: Schirmung
- 8: Schutzgasatmosphäre
- 9: Kamera
- 10: Anzeigeeinrichtung
- 11: Delamination
- 12: Faser
- 13: Fügebereich
- 14: Fügelinie

## Patentansprüche

1. Verfahren zum Entfernen von Matrixharzen aus faserverstärkten Kunststoffbauteilen mit einer Kunststoffmatrix aus Matrixharzen, in die zur Verstärkung Fasern eingebettet sind, insbesondere als vorbereitende Maßnahme für eine sich anschließende Reparatur oder einen sich anschließenden Fügevorgang, wobei die Matrixharze in einem definierten Bereich durch Einwirkung elektromagnetischer Strahlung entfernt werden, ohne die Fasern in dem Bereich zu zerstören, **dadurch gekennzeichnet, dass** die elektromagnetische Strahlung Mikrowellenstrahlung (4) ist.

2. Verfahren nach Anspruch 1, **dadurch gekennzeichnet, dass** eine Reinfiltrierung des definierten Bereichs (3) mit Harzen, unter Einfluss von Mikrowellenstrahlung (4) erfolgt.

3. Verfahren nach Anspruch 1 oder 2, **dadurch gekennzeichnet, dass** die Reinfiltrierung mit Reparaturharzen erfolgt, die dieselbe Zusammensetzung wie die ursprünglichen Matrixharze aufweisen.

4. Verfahren nach einem der Ansprüche 1 bis 3, **dadurch gekennzeichnet, dass** die reinfiltrierten Harze unter Einfluss von Mikrowellenstrahlung (4) ausgehärtet werden.

5. Verfahren nach einem der Ansprüche 1 bis 4, **dadurch gekennzeichnet, dass** die Mikrowellenstrahlung (4) eine Frequenz im Bereich von 2,45 bis 5,8 GHz aufweist.

6. Verfahren nach einem der Ansprüche 1 bis 5, **dadurch gekennzeichnet, dass** vor dem Neuinfiltrieren eine weitere Faserstruktur an die Fasern (12) in dem Bereich (3) angesetzt wird, die beim Neuinfiltrieren mit denselben Matrixharzen infiltriert wird.

7. Verfahren nach Anspruch 6, **dadurch gekennzeichnet, dass** die Faserstruktur ein Bereich (3) eines weiteren faserverstärkten Kunststoffbauteils (2) ist, aus dem die Matrixharze entfernt wurden.

8. Verfahren nach einem der Ansprüche 1 bis 7, **dadurch gekennzeichnet, dass** die unter Einwirkung der Mikrowellenstrahlung (4) verdampfenden Matrixharze abgesaugt werden.

9. Verfahren nach einem der Ansprüche 1 bis 8, **dadurch gekennzeichnet, dass** das Entfernen der Matrixharze in einer Schutzgasatmosphäre (8) erfolgt.

10. Verfahren nach einem der Ansprüche 1 bis 9, **dadurch gekennzeichnet, dass** die Temperatur des faserverstärkten Kunststoffbauteils (2) kontaktlos überwacht wird.
